**Europäisches Patentamt**

**European Patent Office**

**Office européen des brevets**

(19)

(11) Veröffentlichungsnummer : **0 334 807 B1**

(12) **EUROPÄISCHE PATENTSCHRIFT**

(45) Veröffentlichungstag der Patentschrift :
**12.08.92 Patentblatt 92/33**

(21) Anmeldenummer : **89810173.8**

(22) Anmeldetag : **07.03.89**

(51) Int. Cl.⁵ : **B23B 51/00**

(54) **Hinterschnitt-Bohrvorrichtung.**

(30) Priorität : **23.03.88 DE 3809761**

(43) Veröffentlichungstag der Anmeldung :
**27.09.89 Patentblatt 89/39**

(45) Bekanntmachung des Hinweises auf die
Patenterteilung :
**12.08.92 Patentblatt 92/33**

(84) Benannte Vertragsstaaten :
**CH DE ES FR GB IT LI NL SE**

(56) Entgegenhaltungen :
**EP-A- 0 231 720**

(73) Patentinhaber : **HILTI Aktiengesellschaft**
**FL-9494 Schaan (LI)**

(72) Erfinder : **Noser, Martin**
**Altenbach 5**
**FL-9490 Vaduz (LI)**
Erfinder : **Mark, Fritz**
**Rheinstrasse 27b**
**A-6841 Mäder (AT)**

(74) Vertreter : **Wildi, Roland**
**Hilti Aktiengesellschaft Patentabteilung**
**FL-9494 Schaan (LI)**

## Beschreibung

Die Erfindung betrifft eine Bohrvorrichtung zum Herstellen hinterschnittener Bohrungen in einem Untergrund, mit einem sich auf dem Untergrund abstützenden Gehäuse, in welchem eine mit einer exzentrisch angeordneten, achsparallel verlaufenden Bohrung versehene Führungshülse angeordnet ist, mit einer in der Bohrung um einen Winkel von etwa 180° begrenzt drehbar gelagerten, mit einer Handhabe verbundenen Exzenterbüchse und einer in der Exzenterbüchse drehbar gelagerten, mit einem Antriebsgerät gekuppelten Antriebswelle mit einem Schneidkopf.

Bohrungen mit Hinterschnitt werden hauptsächlich zur Aufnahme entsprechend ausgebildeter, im Hinterschnitt formschlüssig verankerbarer Dübel hergestellt. Wegen der für die Herstellung des Hinterschnitts erforderlichen, aufwendigen Verfahren oder störungsanfälligen Vorrichtungen zur Durchführung der Verfahren konnten sich solche Dübel allerdings bis heute nicht in grossem Umfang durchsetzen.

Eine aus der AT-PS 368 244 bekannte, in ihrer Handhabung relativ aufwendige Vorrichtung zur Herstellung eines solchen Hinterschnitts besteht im wesentlichen aus einer Führungshülse, einer darin drehbar gelagerten Exzenterbüchse und einer in der Exzenterbüchse drehbar gelagerten Antriebswelle mit einem Schneidkopf. Die Exzentrizität der Führungshülse entspricht dabei etwa derjenigen der Exzenterbüchse. Somit ist in der einen Extremstellung der Führungshülse und der Exzenterbüchse die Antriebswelle zentral in der Führungshülse angeordnet. In der anderen, um einen Winkel von etwa 180° verdrehten Extremstellung ist die Antriebswelle um das doppelte Mass der Exzentrizität radial nach aussen gerückt. Zwischen diesen beiden Extremstellungen erfolgt ein Einstechen des Schneidkopfes in die Bohrlochwandung. Nach dem vollen Einstechen werden die Exzenterbüchse und die Führungshülse zusammen um einen Winkel von etwa 360° verdreht. Dabei wird in der Bohrlochwandung ein umlaufender Hinterschnitt erzeugt. Anschliessend muss die Exzenterbüchse in der Führungshülse wieder um 180° weiter- oder zurückgedreht werden, damit die Antriebswelle wieder zentrisch in der Führungshülse angeordnet ist und die Bohrvorrichtung aus dem Bohrloch ausgefahren werden kann. Für das Verdrehen weisen die Führungshülse und die Exzenterbüchse je eine separate Handhabe auf.

Bei einer weiteren, durch Verbesserung in der Handhabung in baulicher Hinsicht allerdings recht aufwendigen, aus der EU-PA 0 231 720 bekannten Vorrichtung, die im wesentlichen nach dem vorgenannten Prinzip arbeitet, ist die Führungshülse in einem diese umgebenden Gehäuse drehbar gelagert. Die Exzenterbüchse ist mit einem Zahnkranz verbunden, in den eine über ein Getriebe antreibbare Schneckenwelle eingreift. Die Exzenterbüchse und die Führungshülse sind durch einen axial ausrückbaren Stift miteinander kuppelbar. Nach dem Einführen der Vorrichtung mit zentrisch angeordneter Antriebswelle wird die Exzenterbüchse in der Führungshülse mittels des Getriebes um 180° verdreht, bis der ausrückbare Stift an einem Anschlag an der Führungshülse zur Anlage gelangt. Beim anschliessenden Weiterdrehen des Getriebes wird über den Stift auch die Führungshülse zusammen mit der Exzenterbüchse verdreht. Nach dem Herstellen eines vollständigen Hinterschnitts wird der Stift axial ausgerückt, so dass die Exzenterbüchse in der Führungshülse weitergedreht werden kann, bis die Bohrung in der Exzenterbüchse wieder zentrisch in der Führungshülse angeordnet ist und die Bohrvorrichtung aus dem Bohrloch entfernt werden kann.

Der Erfindung liegt die Aufgabe zugrunde, eine im baulichen Aufbau und in der Handhabung einfache Vorrichtung zum Herstellen hinterschnittener Bohrungen zu schaffen, die nach dem bewährten, vorgängig geschilderten Exzenterprinzip arbeitet.

Gemäss der Erfindung wird dies dadurch erreicht, dass zwischen dem Gehäuse und der Führungshülse ein Sperrelement vorgesehen ist, welches das Verdrehen der Führungshülse im Gehäuse nur in einer Drehrichtung ermöglicht.

Durch das erfindungsgemässe Sperrelement besteht zwischen dem Gehäuse und der Führungshülse ein Freilauf, dh die Führungshülse kann im Gehäuse in einer Drehrichtung gedreht werden, während sie in der Gegendrehrichtung sperrt. Somit kann zwischen der Führungshülse und der Exzenterbüchse eine Einrichtung hergestellt werden, welche ein Verdrehen der Exzenterbüchse in der Führungshülse um 180° ermöglicht. Eine solche Einrichtung kann beispielsweise aus einer sich über 180° erstreckenden Ringnut und einem darin eingreifenden Stift bestehen.

Die Bohrvorrichtung wird in ein Bohrloch eingeführt, wenn sich die Exzentrizität der Exzenterbüchse und der Führungshülse aufheben, so dass die Antriebswelle in der Führungshülse zentrisch angeordnet ist. Nach dem Einführen der Bohrvorrichtung in ein Bohrloch bis zum Anschlag des Gehäuses am Untergrund wird die Exzenterbüchse in der Führungshülse bis zum Anschlag verdreht, wobei ein Einstechen des Schneidkopfes erfolgt. Beim Weiterdrehen wird über den Anschlag die Führungshülse mit der Exzenterbüchse mitgenommen. Nach einem Weiterdrehen der Exzenterbüchse samt der Führungshülse um 360° ist der Hinterschnitt hergestellt und die Exzenterbüchse kann in der Führungshülse in der Gegenrichtung wieder um 180° zurückgedreht werden, so dass die Antriebswelle in die Mitte der Führungshülse gelangt. Dabei wird ein Mitdrehen der Führungshülse durch das Sperrelement verhindert.

Das Sperrelement ist zweckmässigerweise als Schlingfeder ausgebildet. Eine Schlingfeder ist im wesentlichen eine Schraubenfeder, die so eng um ein Teil gewickelt ist, dass sie damit in Reibverbindung steht. Das eine freie Ende der Schlingfeder ist mit dem anderen Teil drehfest verbunden. In der einen Drehrichtung wird nun die Schlingfeder durch die Reibung geöffnet und bleibt in gleitendem Kontakt mit dem Teil, das sie umgibt. In der Gegendrehrichtung wird die Schlingfeder enger um das Teil gewickelt und durch die Reibung erfolgt eine Bremswirkung. Der wesentliche Vorteil einer Schlingfeder besteht darin, dass sie sehr einfach in der Herstellung ist und auf begrenztem Raum angeordnet werden kann.

Eine weitere vorteilhafte Ausführung besteht darin, dass das Sperrelement als Klemmrollenfreilauf ausgebildet ist. Klemmrollenfreiläufe sind als fertige Bauteile erhältlich, benötigen etwa so viel Platz wie ein entsprechendes Wälzlager und sind relativ preisgünstig.

Weiterhin ist es zweckmässig, das Sperrelement als Ratsche auszubilden. Eine Ratsche besteht im wesentlichen aus einer Verzahnung und einer darin eingreifenden Klinke. Das Sperren in einer Drehrichtung kann durch ein entsprechend unsymmetrisch ausgebildetes Profil der Verzahnung oder durch die Anordnung des Drehpunktes der Klinke erreicht werden.

Das Gehäuse ist vorteilhaft zweiteilig ausgebildet, wobei sich das eine Gehäuseteil am Untergrund abstützt, die Führungshülse sich am anderen Gehäuseteil abstützt, gegenüber dem sich am Untergrund abstützenden Gehäuseteil in axialer Richtung verstellbar ist und das Sperrelement zwischen der Führungshülse und einem der beiden Gehäuseteile angeordnet ist. Eine solche Zweiteiligkeit des Gehäuses ermöglicht es, den Hinterschnitt auf unterschiedlicher Tiefe des Bohrloches anzubringen. Dies ist beispielsweise dann notwendig, wenn in der vorgesehenen Tiefe ein Armierungseisen durch das Bohrloch verläuft.

Die beiden Gehäuseteile sind zweckmässigerweise über ein Gewinde miteinander verbunden. Ueber das Gewinde ist ein direktes Verstellen der beiden Gehäuseteile relativ zueinander möglich. Um während des Bearbeitens ein Lösen, bzw Verstellen des Gewindes durch die entstehenden Vibrationen zu verhindern, können die beiden Gehäuseteile beispielsweise über ein ausrückbares Rastelement miteinander drehfest verbunden werden. Das Gewinde ermöglicht ein genaues axiales Verstellen der beiden Gehäuseteile relativ zueinander.

Zwischen der Antriebswelle und dem Antriebsgerät ist vorteilhaft eine flexible Welle angeordnet. Eine flexible Welle gleicht den seitlichen Versatz aus, der sich durch die exzentrische Bewegung der Antriebswelle im Bohrloch ergibt. Eine flexible Welle gleicht auch einen allfälligen Versatz aus, wenn die Achse des Bohrloches und diejenigen des Antriebsgerätes nicht genau fluchten. Als flexible Welle können handelsübliche Elemente verwendet werden.

Das Gehäuse weist zweckmässigerweise Ringräume mit Zu- und Abflussstutzen für Kühlwasser auf, welche über Zuleitungen mit dem Schneidkopf in Verbindung stehen. Das Anordnen solcher Zuleitungen zum Schneidkopf ermöglicht die Verwendung von diamantenbestückten Werkzeugen, welche für die Kühlung sowie für den Abtransport des Bohrkleins und das Verhindern von Staubbildung Kühlwasser erfordern. Der äussere, vorzugsweise dem Abführen des Kühlwassers dienende Ringraum kann mittels einer elastischen, aus Gummi oder Kunststoff bestehenden Dichtmanschette abgedichtet werden.

Die Erfindung soll nachstehend, anhand der sie beispielsweise wiedergebenden Zeichnungen, näher erläutert werden. Es zeigen:

Fig. 1 eine erfindungsgemässe Bohrvorrichtung mit einem entlang einer Führungssäule verschiebbaren Antriebsgerät,

Fig. 2 die aus Fig. 1 ersichtliche Bohrvorrichtung, in vergrössertem Massstab, im Schnitt dargestellt,

Fig. 3 einen Querschnitt durch die in Fig. 2 dargestellte Bohrvorrichtung, entlang der Linie III-III,

Fig. 4 einen Querschnitt durch die in Fig. 2 dargestellte Bohrvorrichtung, entlang der Linie IV-IV.

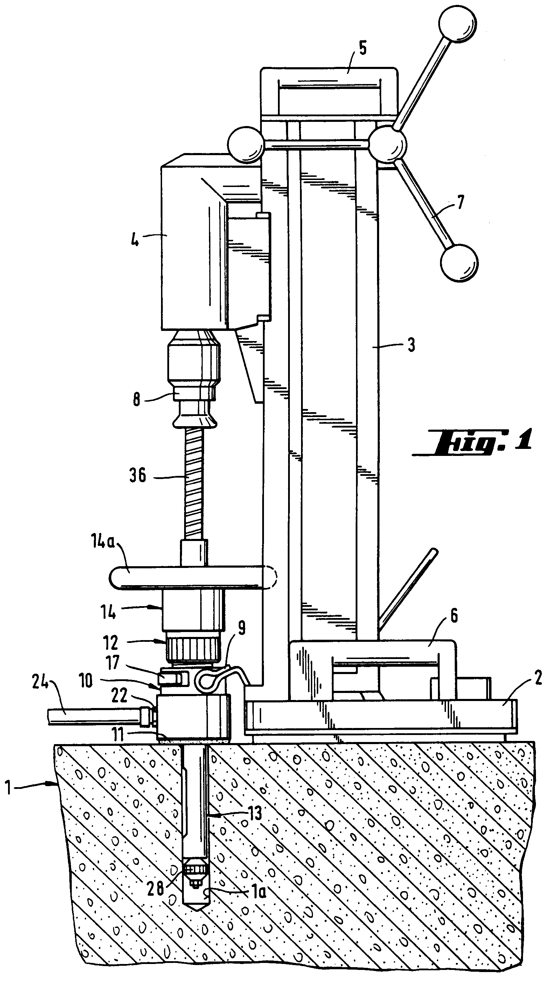

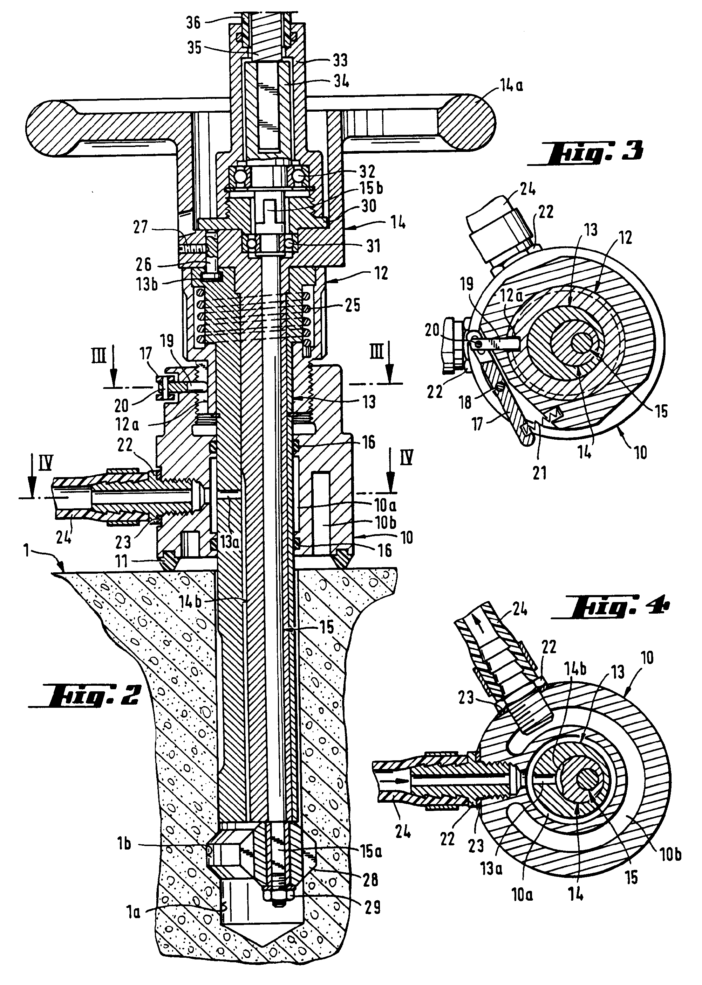

Die aus Fig. 1 bis 4 ersichtliche Bohrvorrichtung dient vorzugsweise dazu, um in einem Untergrund 1 ein Bohrloch 1a mit einem Hinterschnitt 1b zur Aufnahme eines entsprechend ausgebildeten, formschlüssig verankerbaren Dübels zu versehen. Die Bohrvorrichtung besteht im wesentlichen aus einer auf dem Untergrund 1 befestigbaren Grundplatte 2, einer damit verbundenen Tragsäule 3 und einem entlang der Tragsäule 3 verschiebbaren Antriebsgerät 4. Zur besseren Handhabung ist die Bohrvorrichtung mit Traggriffen 5, 6 versehen. Ein Handrad 7 dient dem Verschieben des Antriebsgerätes 4 an der Tragsäule 3. Das Antriebsgerät 4 ist mit einem Werkzeughalter 8 versehen. Ein Spannhebel 9 dient dem Anpressen eines Gehäuses 10 gegen den Untergrund 1. Das Gehäuse 10 wird mittels einer elastischen Dichtmanschette 11 gegenüber dem Untergrund 1 abgedichtet. Ein als Gewindehülse 12 ausgebildetes Gehäuseteil steht über ein Gewinde in Verbindung mit dem Gehäuse 10.

Im Gehäuse 10 und der Gewindehülse 12 ist eine mit einer exzentrisch angeordneten, achsparallel verlaufenden Bohrung versehene Führungshülse 13 drehbar gelagert. In der exzentrischen Bohrung der Führungshülse 13 ist eine Exzenterbüchse 14 ebenfalls mit einer exzentrisch angeordneten Längsbohrung begrenzt drehbar gelagert. Die Exzenterbüchse 14 ist mit einer als Handrad ausgebildeten Handhabe 14a versehen. Die Handhabe 14a dient dem Verdrehen der Exzenterbüchse 14 in der Führungshülse 13. In der Exzenterbüchse 14 ist eine Antriebswelle 15 drehbar gelagert. Das Gehäuse 10 weist einen inneren Ringraum 10a und einen äusseren Ringraum 10b auf. Der innere Ringraum 10a ist gegenüber der Führungshülse 13 durch Dichtringe 16 abgedichtet. Ein Auslösehebel 17 ist im Gehäuse 10 um eine parallel zur Längsachse verlaufende Achse 18 schwenkbar gelagert. Der Auslösehebel 17 ist mittels eines Stifts 20 mit einem Bolzen 19 gelenkig verbunden. Der Auslösehebel 17 wird mittels einer Druckfeder 21 in der in Fig. 3 dargestellten Stellung gehalten. Der Bolzen 19 greift in eine Längsnut 12a der Gewindehülse 12 ein und bildet somit eine Drehsicherung zwischen dem Gehäuse 10 und der Gewindehülse 12. Bei Betätigung des Auslösehebels 17 wird der Bolzen 19 aus der Längsnut 12a ausgerückt und die Gewindehülse 12 gegenüber dem Gehäuse 10 somit verdrehbar. Die Gewindehülse 12 ermöglicht dadurch ein Verstellen der Bohrvorrichtung in Achsrichtung. Dies ist beispielsweise dann zweckmässig, wenn der vorgesehene Hinterschnitt 1b in den Bereich eines Armierungseisens zu liegen kommt. Solche Armierungseisen ergeben einen sehr starken Verschleiss des Bohrwerkzeuges. Nach dem Betätigen des Auslösehebels 17 kann die axiale Lage des zu erstellenden Hinterschnittes durch Verdrehen der Gewindehülse 12 verändert werden.

Der innere Ringraum 10a und der äussere Ringraum 10b sind über Anschlussstutzen 22 und Dichtscheiben 23 mit Schläuchen 24 verbunden. Die Schläuche 24 dienen der Zu- und Abführung von Kühlwasser. Dieses Kühlwasser ist insbesondere dann erforderlich, wenn mit diamantenbestückten Werkzeugen gearbeitet wird. Das Kühlwasser dient dabei einerseits der Kühlung des Bohrwerkzeuges und andererseits dem Abführen des Bohrschlammes und gelangt über eine Radialbohrung 13a sowie einen Kanal 14b zum Werkzeug.

Zwischen der Gewindehülse 12 und der darin drehbar gelagerten Führungshülse 13 ist eine Schlingfeder 25 angeordnet. Diese Schlingfeder 25 dient als Sperrelement und ermöglicht ein Verdrehen der Führungshülse 13 im Gehäuse 10 bzw der Gewindehülse 12 nur in einer Drehrichtung. Anstelle der Schlingfeder kann auch ein Freilauf, beispielsweise in Form eines Klemmrollenfreilaufes eingebaut werden. In der Exzenterbüchse 14 ist ein als Kopfbolzen ausgebildeter Anschlag 26 angeordnet, welcher mittels eines Gewindestiftes 27 gesichert wird und in eine Bogennut 13b der Führungshülse 13 eingreift. Diese Bogennut erstreckt sich über einen Winkel von rund 180° und begrenzt die Verdrehbarkeit der Exzenterbüchse 14 in der Führungshülse 13. Dieses Verdrehen der Exzenterbüchse 14 in der Führungshülse 13 ist notwendig, damit ein auf der Antriebswelle 15 angeordneter Schneidkopf 28 von der in Fig. 1 dargestellten zentrischen Lage in die in Fig. 2 dargestellte maximal ausgerückte exzentrische Lage gelangt. Der Kopf des Anschlages 26 dient ausserdem der axialen Sicherung der Exzenterbüchse 14 gegenüber der Führungshülse 13. Nach dem Einsetzen der Bohrvorrichtung in ein vorgefertigtes Bohrloch 1a wird also zunächst die Exzenterbüchse 14 mittels der Handhabe 14a gegenüber der Führungshülse 13 um rund 180° verdreht. Dabei dringt der mittels einer Mutter 29 auf der Antriebswelle 15 befestigte Schneidkopf 28 in die Wandung des Bohrloches 1a ein. Die drehfeste Verbindung des Schneidkopfes 28 mit der Antriebswelle 15 erfolgt über einen Mehrkant 15a. An ihrem rückwärtigen Ende ist die Antriebswelle 15 mit einer Keilnase 15b versehen. Ein Flansch 30 dient zur axialen Sicherung eines Lagers 31, in dem die Antriebswelle 15 drehbar gelagert ist. Rückwärtig an den Flansch 30 ist ein weiteres Lager 32 angeordnet. Eine Muffe 33 ist mit dem Flansch 30 verbunden und umgibt ein Kupplungsteil 34, das über die Keilnase 15b mit der Antriebswelle 15 drehfest verbunden ist. Das Kupplungsteil 34 steht in drehfester Verbindung mit einer flexiblen Welle 35, welche mit dem Werkzeughalter 8 des Antriebsgerätes 4 verbunden ist. Zum Schutz ist die flexible Welle 35 von einem elastischen Hüllrohr 36 umgeben. Die flexible Welle 35 gleicht den seitlichen Versatz der Bohrvorrichtung gegenüber dem Antriebsgerät 4 aus.

Nachdem die Antriebswelle 15 in die in Fig. 2 dargestellte exzentrische Lage gebracht worden ist, wird an der Handhabe 14a in derselben Drehrichtung weitergedreht. Dabei wird über den Anschlag 26 auch die Führungshülse 13 mitgenommen. Nachdem dann die Exzenterbüchse 14 und die Führungshülse 13 um ein volle Umdrehung verdreht wurden, ist die Herstellung des Hinterschnitts abgeschlossen. Die Exzenterbüchse 14 wird dann an der Handhabe 14a in der entgegengesetzten Drehrichtung um eine halbe Umdrehung verdreht und die Antriebswelle 15 somit wieder in die zentrische Lage gebracht. Die Schlingfeder 25 verhindert dabei ein Mitdrehen der Führungshülse 13. Anschliessend kann die Bohrvorrichtung aus dem Bohrloch 1a herausgezogen werden.

## Patentansprüche

1. Bohrvorrichtung zum Herstellen hinterschnittener Bohrungen in einem Untergrund (1), mit einem sich auf dem Untergrund (1) abstützenden Gehäuse (10, 12), in welchem eine mit einer exzentrisch angeordneten, achsparallel verlaufenden Bohrung versehene Führungshülse (13) angeordnet ist, mit einer in der Bohrung um einen Winkel von etwa 180° begrenzt drehbar gelagerten, mit einer Handhabe (14a) verbundenen Exzenterbüchse (14) und einer in der Exzenterbüchse (14) drehbar gelagerten, mit einem Antriebsgerät (4) gekuppelten Antriebswelle (15) mit einem Schneidkopf (28), **dadurch gekennzeichnet**, dass zwischen dem Gehäuse

EP 0 334 807 B1

(10, 12) und der Führungshülse (13) ein Sperrelement vorgesehen ist, welches das Verdrehen der Führungshülse (13) im Gehäuse (10, 12) nur in einer Drehrichtung ermöglicht.

2. Vorrichtung nach Anspruch 1, dadurch gekennzeichnet, dass das Sperrelement als Schlingfeder (25) ausgebildet ist.

3. Vorrichtung nach Anspruch 1, dadurch gekennzeichnet, dass das Sperrelement als Klemmrollenfreilauf ausgebildet ist.

4. Vorrichtung nach Anspruch 1, dadurch gekennzeichnet, dass das Sperrelement als Ratsche ausgebildet ist.

5. Vorrichtung nach einem der Ansprüche 1 bis 4, dadurch gekennzeichnet, dass das Gehäuse (10, 12) zweiteilig ausgebildet ist, wobei sich das eine Gehäuseteil (10) am Untergrund (1) abstützt, die Führungshülse (13) sich am andern Gehäuseteil (12) abstützt, gegenüber dem sich am Untergrund abstützenden Gehäuseteil (10) in axialer Richtung verstellbar ist und das Sperrelement zwischen der Führungshülse (13) und einem der beiden Gehäuseteile (10, 12) angeordnet ist.

6. Vorrichtung nach Anspruch 5, dadurch gekennzeichnet, dass die beiden Gehäuseteile (10, 12) über ein Gewinde miteinander verbunden sind.

7. Vorrichtung nach einem der Ansprüche 1 bis 6, dadurch gekennzeichnet, dass zwischen der Antriebswelle (15) und dem Antriebsgerät (4) eine flexible Welle (35) angeordnet ist.

8. Vorrichtung nach einem der Ansprüche 1 bis 7, dadurch gekennzeichnet, dass das Gehäuse (10) Ringräume (10a, 10b) mit Zu- und Abflussstutzen für Kühlwasser aufweist, welche über Zuleitungen mit dem Schneidkopf (28) in Verbindung stehen.


## Claims

1. Drilling device for producing undercut holes in a base (1), with a housing (10, 12) which is supported on the base (1) and in which is positioned a guide sleeve (13) provided with an eccentrically positioned hole running parallel to the axis, with an eccentric bush (14) which is supported in the hole so that it can rotate to a restricted extent through an angle of about 180° and is connected to a handle (14a), and with a drive shaft (15) with cutting head (28) which is supported in the eccentric bush (14) so that it can rotate and is connected to a drive unit (4), **characterized in that** a blocking element, which makes it possible to rotate the guide sleeve (13) in only one rotational direction in the housing (10, 12), is provided between the housing (10, 12) and the guide sleeve (13).

2. Device according to Claim 1, characterized in that the blocking element is formed as a wrap-around spring (25).

3. Device according to Claim 1, characterized in that the blocking element is formed as a jamming-roller one-way clutch.

4. Device according to Claim 1, characterized in that the blocking element is formed as a ratchet.

5. Device according to one of Claims 1 to 4, characterized in that the housing (10, 12) is formed in two parts, in which one part of the housing (10) is supported on the base (1), the guide sleeve (13) is supported on the other part of the housing (12) and can be moved in the axial direction relative to the part of the housing (10) supported on the base, and the blocking element is positioned between the guide sleeve (13) and one of the two parts of the housing (10, 12).

6. Device according to Claim 5, characterized in that the two parts of the housing (10, 12) are joined to one another by a screw thread.

7. Device according to one of Claims 1 to 6, characterized in that a flexible shaft (35) is positioned between the drive shaft (15) and the drive unit (4).

8. Device according to one of Claims 1 to 7, characterized in that the housing (10) has annular spaces (10a, 10b) with inlet and outlet connections for cooling water which are connected via supply lines to the cutting head (28).


## Revendications

1. Dispositif de perçage pour la réalisation de trous contre-dépouillés dans un matériau de réception (1), comprenant un carter (10, 12) qui prend appui sur le matériau de réception (1) et dans lequel est disposée une douille de guidage (13) munie d'un alésage excentré et orientée parallèlement à l'axe, un coussinet d'excentrique (14) monté dans l'alésage de manière à permettre une rotation limitée d'un angle d'environ 180° et raccordé à une poignée (14a), et un arbre moteur (15) monté de manière tournante dans le coussinet d'excentrique

5

(14), couplé avec un dispositif d'entraînement (4) et équipé d'une tête de coupe (28), **caractérisé en ce** qu'entre le carter (10, 12) et la douille de guidage (13) est prévu un élément d'arrêt qui n'autorise la rotation de la douille de guidage (13) dans le carter (10, 12) que dans une seule direction de rotation.

2. Dispositif selon la revendication 1, caractérisé en ce que l'élément d'arrêt est conformé en ressort enroulé (25).

3. Dispositif selon la revendication 1, caractérisé en ce que l'élément d'arrêt est conformé en embrayage à roue libre.

4. Dispositif selon la revendication 1, caractérisé en ce que l'élément d'arrêt est conformé en cliquet.

5. Dispositif selon l'une des revendications 1 à 4, caractérisé en ce que le carter (10, 12) est réalisé en deux éléments, l'un des éléments de carter (10) prenant appui sur le matériau de réception (1), la douille de guidage (13) s'appuyant sur l'autre élément de carter (12) par rapport auquel l'élément de carter (10) s'appuyant sur le matériau de réception peut être déplacé dans le sens axial, et l'élément d'arrêt étant disposé entre la douille de guidage (13) et l'un des deux éléments de carter (10, 12).

6. Dispositif selon la revendication 5, caractérisé en ce que les deux éléments de carter (10, 12) sont reliés entre eux par l'intermédiaire d'un filetage.

7. Dispositif selon l'une des revendications 1 à 6, caractérisé en ce qu'un flexible (35) est disposé entre l'arbre moteur (15) et le dispositif d'entraînement (4).

8. Dispositif selon l'une des revendications 1 à 7, caractérisé en ce que le carter (10) comporte des espaces annulaires (10a, 10b) avec des tubulures d'arrivée et d'évacuation pour l'eau de refroidissement qui communiquent avec la tête de coupe (28) par l'intermédiaire de conduites d'alimentation.

**Fig. 1**

**Fig. 2**

**Fig. 3**

**Fig. 4**